# EUROPEAN PATENT APPLICATION

(11) **EP 4 553 177 A1**
(43) Date of publication of application: **14.05.2025**
(21) Application number: 23857177.2
(22) Date of filing: 07.08.2023
(51) Int. Cl.: C21D 8/12, C21D 9/56, C22C 38/00, C22C 38/04, C22C 38/60, H01F 1/147

(54) **ANNEALING FACILITY, AND METHOD FOR MANUFACTURING GRAIN-ORIENTED ELECTROMAGNETIC STEEL SHEET**

(30) Priority: 22.08.2022 JP 2022132107
(71) Applicant: JFE Steel Corporation, Tokyo 100-0011 (JP)
(72) Inventor: SHINGAKI Yukihiro, Tokyo 100-0011 (JP); TORIU Junichi, Tokyo 100-0011 (JP); YOSHIKAWA Ayaka, Tokyo 100-0011 (JP)
(74) Representative: Hoffmann Eitle
(86) International application number: PCT/JP2023/028834
(87) International publication number: WO 2024/043063

(57) **Abstract**

Provided is an annealing facility that contributes to further improvement of magnetic properties by more active control of carbon in steel. An annealing facility includes a heating zone, a soaking zone, and a cooling zone on a conveyance line for a steel strip. The conveyance line is capable of passing a steel strip with a thickness of 2.8 mm or more, the soaking zone has means for maintaining an ambient temperature at 900 °C or higher, the cooling zone has means for supplying a refrigerant to the steel strip and maintaining an average cooling rate of 50 °C/s or higher in a temperature region of 750 °C or lower and 120 °C or higher, and the annealing facility includes removal means for removing the refrigerant on an exit side of the cooling zone.

## Description

### TECHNICAL FIELD

The present disclosure relates to an annealing facility, in particular an annealing facility that enables the production of grain-oriented electrical steel sheets with excellent magnetic properties, and a method of producing a grain-oriented electrical steel sheet using the annealing facility.

### BACKGROUND

Grain-oriented electrical steel sheets are steel sheets, with excellent magnetic properties, that have a crystalline texture (Goss orientation) with a highly concentrated <001> orientation, which is the easy magnetization axis of iron, in the rolling direction of the steel sheet. One method to improve the magnetic properties of a grain-oriented electrical steel sheet is to control the form of C in the steel by controlling the cooling process after annealing prior to final cold rolling.

For example, in Patent Literature (PTL) 1, a technique is proposed to precipitate fine carbides with a grain size of 100 Å to 500 Å by applying rapid cooling and aging treatment under a specific set of conditions to steel sheets after annealing.

Furthermore, in PTL 2, a technique is proposed to increase solute C by cooling post-annealing steel sheets under a set of conditions including a cooling rate of 150 °C/min or higher in a temperature region of 600 °C to 300 °C.

The technique proposed in PTL 1 and 2 controls carbon in the steel as ultra-fine carbides and solute C. When dislocations are introduced during cold rolling, the solute C and the like therefore adhere to the dislocations, forming a Cottrell atmosphere, which promotes non-uniform deformation during cold rolling, modifies the cold-rolled texture, and improves the texture after primary recrystallization. This effect is also known in general steels as a method to increase the {110} strength in the post-recrystallization texture during annealing after cold rolling. In a grain-oriented electrical steel sheet, the texture is ultimately accumulated at {110}<001> using a metallurgical phenomenon called secondary recrystallization. At this time, the {110} texture can act as a good nucleus for secondary recrystallization.

Since the texture after primary recrystallization is strongly influenced by the cold rolling conditions, the cold rolling reduction ratio is one very important factor. For example, it is known that good magnetic properties can be obtained by controlling the texture with a cold rolling reduction ratio of 85 % or higher when a grain-oriented electrical steel sheet is produced by one pass of cold rolling without intermediate annealing.

### CITATION LIST

### Patent Literature

PTL 1: JP S58-157917 A
PTL 2: JP S52-094825 A

### SUMMARY

### (Technical Problem)

The technique disclosed in each of the above publications requires an increase in the cooling rate of annealing before cold rolling in order to make the carbon in the steel before cold rolling either an ultra-fine carbide or a solute C state. In addition, in order to reduce production costs, manufacturers of grain-oriented electrical steel sheets are required to develop a production method that achieves the final sheet thickness by one pass of cold rolling, without intermediate annealing. However, if the final sheet thickness is to be achieved by one pass of cold rolling, the cold rolling must be performed at a high reduction rolling ratio higher than 85 % to obtain a good primary recrystallized texture.

A relatively thick standard for grain-oriented electrical steel sheets, with a thickness of 0.35 mm, also exists. In order to achieve such a plate thickness by one pass of cold rolling, moreover with high reduction cold rolling that is suitable for controlling the texture, the sheet before rolling is very thick. Usually, grain-oriented electrical steel sheets have a composition of 2.0 % or more Si to obtain good magnetic properties, but Si is also known as a brittle element, and it has been difficult to pass thick steel strips stably without fracture in the line. Also, when cooling is performed, a higher cooling capability is expected to be required for thicker sheets.

The present disclosure advantageously solves the above problems and proposes an annealing facility that contributes to further improvement of magnetic properties by more active control of carbon in steel, and a method of producing a grain-oriented electrical steel sheet using this annealing facility.

### (Solution to Problem)

It is known that the magnetic properties of a grain-oriented electrical steel sheet can be improved by controlling precipitates, called inhibitors, and by controlling the texture before secondary recrystallization. As one of these two ways to improve magnetic properties, one technique with few inhibitor elements is a technique to develop secondary recrystallization without inclusion of inhibitor-forming components (an inhibitor-less method), as disclosed, for example, in JP 2000-129356 A. This technique has a small amount of inhibitor elements, which is important for both ways of improving magnetic properties, and thus yields a type of steel for which texture control plays a particularly important role.

We therefore conducted experiments using a grain-oriented electrical steel sheet containing no inhibitor components (C: 0.045 %, Si: 3.25 %, Mn: 0.06 %, with S, Se, and O each less than 50 ppm, N less than 25 ppm, and the balance consisting of Fe and inevitable impurities), and found that the following are extremely important factors for improving magnetic properties.

### [Cooling stop temperature and cold rolling reduction ratio for hot-rolled sheet annealing]

In the case of producing a grain-oriented electrical steel sheet in a single cold rolling, the optimum rolling reduction ratio in the cold rolling is a high value, such as 88 %. In general, as the cold rolling reduction ratio is higher, the texture becomes more prominent and the improvement effect become clearer, but if the cold rolling reduction ratio is increased excessively, the number of {110}<001> oriented grains, which function as nuclei for secondary recrystallization, will decrease and begin to work against the secondary recrystallization. From this perspective, the cold rolling reduction ratio often has the aforementioned extreme values.

We considered the possibility that coarse carbides may affect the reduction in the {110}<001> oriented grains in particular. This is because the carbides are harder than the base metal and thus do not deform during cold rolling. As a result, the crystalline texture around the carbides is forced to deform during cold rolling. We considered that the reduction of {110}<001> oriented grains is partly due to such coarse carbides.

As described in PTL 1 and 2, solute C and ultra-fine carbides are used to form {110}<001> oriented grains. Therefore, it is thought that if the formation of coarse carbides can be suppressed by thorough cooling control, the effect of improved texture can be obtained up to a higher rolling reduction ratio, and good magnetic properties can be obtained. Similar results were also obtained in newly conducted experiments.

Normally, gas, water, or the like is used for cooling after annealing. If rapid cooling is required, use of low-temperature water is efficient. When cooling is performed using water, if the water used for cooling remains on the steel strip and is brought into the production line, it may cause corrosion or the like of the line. Therefore, by setting the cooling stop temperature of the steel strip to 150 °C or higher, water remaining on the steel sheet after cooling can be evaporated by the heat of the steel sheet, and the residual water can be treated efficiently. The setting of the lower limit of the temperature region for cooling to a value such as 300 °C, as noted in PTL 2 and the like, is oriented toward such efficient production. Alternatively, in the case of using a process such that residual water remains on the steel sheet, the water may be removed by heating with a heater or the hot blast from a dryer. In all cases, however, keeping the steel strip at a temperature of 150 °C or higher or performing external heat treatment leads to some degree of carbide formation.

Based on the above ideas and considerations, we discovered that by suddenly cooling to 120 °C or lower, which is less than 150 °C, in the cooling during annealing before cold rolling, and then guiding to the cold rolling process without causing a temperature increase preferably of 100 °C or higher from the cooling stop temperature, it is possible to apply a rolling reduction ratio of 89 % or higher, for example, in the cold rolling process to obtain better magnetic properties.

In order to achieve the cooling described above, the removal of residual water on the steel sheet becomes an issue. However, in order to cool down to 120 °C or lower as described above, the heat of the steel sheet itself or external heat cannot be used. We thus discovered that a new residual water removal mechanism is required, such as removing most of the water with a device in direct contact with the steel sheet, such as ringer rolls or wiper blades, and then blowing the remaining water away with dry gas not exceeding 150 °C.

### [Regarding measures for base metal thickness to achieve a high reduction rolling ratio during cold rolling]

An increase in the cold rolling reduction ratio implies that the thickness of the base metal before cold rolling is thicker than in a conventional approach. A conveyance line that can convey thicker steel sheets is therefore required in the annealing facility. In other words, it is important that the conveyance line be capable of passing a steel sheet with a thickness of 2.8 mm or more.

We have also studied concrete measures to realize such a conveyance line and have found the following two measures to be effective.

In the annealing facility, a steel strip is passed while being bent multiple times by conveyance rollers. During this bending process, compressive stress is applied to the inside of the bend and tensile stress to the outside. This tendency becomes more pronounced as the sheet thickness increases, so that thicker steel sheets inevitably have a higher risk of fracture on the line. Since the stress generated during the bending process is affected by the bend radius, the generated stress can be reduced by increasing the diameter of the conveyance roller. Based on the results of bending tests conducted in accordance with roller shape, we discovered that it is advantageous to use a roller diameter of 950 mm or more. A diameter of 1100 mm φ is more preferable. A diameter of 1350 mm φ or more is even more preferable.

In addition, since steel exhibits greater ductility as the temperature is higher, maintaining a higher temperature can reduce the risk of fracture. In particular, since a hot-rolled coil whose temperature has been reduced to room temperature typically enters at the entry-side of the annealing facility, it is advantageous to provide a line for heating in advance or a line for heating after discharge and before the looper, so as to provide a function to increase the steel strip temperature. When conducting the aforementioned bend test, we also examined the steel sheet temperature and discovered that setting the steel strip temperature to 70 °C or higher significantly reduces the risk of fracture.

On the other hand, temperature control after annealing and cooling does not mean that the temperature can be set unlimitedly high. The reason is that excessively high temperatures are undesirable because of the need to suppress carbide formation after cooling. We discovered that a temperature region of 50 °C or higher and 120 °C or lower is advantageous for suppressing carbide formation while lowering the risk of fracture. In particular, we also discovered that when a temperature below 70 °C is applied to the steel strip, the aforementioned conveyance roller preferably has a diameter of 1100 mm or more.

The present disclosure was achieved based on the aforementioned discoveries. We thus provide the following.
1. An annealing facility including a heating zone, a soaking zone, and a cooling zone on a conveyance line for a steel strip, wherein the conveyance line is capable of passing a steel strip with a thickness of 2.8 mm or more, the soaking zone has means for maintaining an ambient temperature at 900 °C or higher, the cooling zone has means for supplying a refrigerant to the steel strip and maintaining an average cooling rate of 50 °C/s or higher in a temperature region of 750 °C or lower and 120 °C or higher, and the annealing facility includes removal means for removing the refrigerant on an exit side of the cooling zone.
2. The annealing facility according to 1, further including a payoff reel that uncoils the steel strip onto the conveyance line at a starting end of the conveyance line and an entry-side looper that applies tension to the steel strip on the conveyance line, and between the payoff reel and the entry-side looper, a trimmer that trims an edge of the steel strip.
3. The annealing facility according to 1 or 2, including a transport roller that changes a direction of travel of the steel strip passing through the conveyance line, wherein the transport roller has a diameter of 950 mm or more.
4. The annealing facility according to 2 or 3, including means for heating the steel strip to 70 °C or higher on an entry side of the entry-side looper.
5. The annealing facility according to any one of 1 to 4, wherein the refrigerant is a coolant at 80 °C or lower, and the removal means includes two or more means with different mechanisms for eliminating residual coolant on the steel strip.
6. The annealing facility according to 5, wherein the removal means include both means for directly eliminating and means for indirectly eliminating the residual coolant on the steel strip.
7. The annealing facility according to any one of 1 to 6, including, at an exit side of the removal means, means for measuring a temperature of the steel strip and maintaining the temperature at a predetermined temperature.
8. A method of producing a grain-oriented electrical steel sheet, the method including performing hot rolling on a steel material containing C: 0.01 mass% or more and 0.10 mass% or less, Si: 2.0 mass% or more and 4.5 mass% or less, and Mn: 0.01 mass% or more and 0.5 mass% or less; performing hot-rolled sheet annealing, with a soaking temperature of 900 °C or higher and an average cooling rate of 50 °C/s or higher in a temperature region of 750 °C or lower and 120 °C or higher during a cooling process, using the annealing facility according to any one of 1 to 7, on a steel strip after the hot rolling; subsequently obtaining a final sheet thickness by one pass of cold rolling with a rolling reduction ratio of 89 % or higher; and subsequently performing decarburization annealing, next applying an annealing separator to a steel strip surface, and then performing final annealing.
9. The method of producing a grain-oriented electrical steel sheet according to 8, wherein the steel strip after the hot rolling has a thickness of 2.8 mm or more.
10. The method of producing a grain-oriented electrical steel sheet according to 8 or 9, wherein a time during which a steel strip temperature exceeds 120 °C after the hot-rolled sheet annealing and before the cold rolling is performed is 0 seconds or more and is and 120 seconds or less.
11. The method of producing a grain-oriented electrical steel sheet according to any one of 8 to 10, wherein a heating rate in a temperature region of 550 °C or higher to 680 °C or lower in a primary recrystallization heating process of the decarburization annealing is 200 °C/s or higher.

### (Advantageous Effect)

The present disclosure makes it possible to stably produce a grain-oriented electrical steel sheet with good magnetic properties.

### BRIEF DESCRIPTION OF THE DRAWINGS

In the accompanying drawings:
FIG. 1 is a schematic diagram illustrating a configuration of an annealing furnace line;
FIG. 2 is a diagram illustrating the relationship of the random strength ratio of the texture and the magnetic flux density to the cold rolling reduction ratio; and
FIG. 3 is a diagram illustrating the relationship of the magnetic flux density to the cold rolling reduction ratio.

### DETAILED DESCRIPTION

A method of producing a grain oriented electrical steel sheet according to the present disclosure will be specifically described below in order by process. In particular, the hot-rolled sheet annealing process will be described together with the configuration of the annealing facility according to the present disclosure that is applied to this process. Since the present disclosure is advantageously adapted in the production of an ordinary grain-oriented electrical steel sheet that utilizes solute C, matters other than the chemical composition of the steel material and the production conditions illustrated below can be based on the production of typical grain-oriented electrical steel sheets.

### [Chemical composition of steel material]

In the composition of the steel material, the content of C, Si, and Mn, which are main components, is limited for the following reasons. Regarding components, indications of "%" stand for "mass%", and indications of "ppm" stands for "mass ppm", unless otherwise specified.

### C: 0.01 % or more and 0.10 % or less

C is an essential element in the present disclosure to improve the primary recrystallized texture using solute C. However, if the C content exceeds 0.10 %, it is extremely difficult to suppress coarse carbides, and the primary recrystallized texture is degraded. Therefore, the C content was limited to 0.10 % or less. On the other hand, if the C content is not 0.01 % or more, the texture improvement effect of solute C cannot be expected. The desirable amount of C to add from the standpoint of magnetic properties is 0.02 % or more. The desirable amount of C to add from the standpoint of magnetic properties is 0.06 % or less.

### Si: 2.0 % or more and 4.5 % or less

Si is an element useful in reducing iron loss by increasing electrical resistance. To obtain good magnetic properties, the Si content needs to be 2.0 % or more. On the other hand, Si is also an element that increases the brittleness of steel. If the Si content exceeds 4.5 %, the risk of fracture during sheet passing on the line increases, and cold rolling manufacturability deteriorates significantly. Therefore, the Si content was limited to 4.5 % or less. The application of the present disclosure can reduce the risk during sheet passing on the line. Therefore, the desirable amount of Si to add is 2.8 % or more. The desirable amount of Si to add is 4.5 % or less.

### Mn: 0.01 % or more and 0.50 % or less

Mn has an effect of improving hot workability at the time of production. If the Mn content exceeds 0.50 %, however, the primary recrystallized texture deteriorates, leading to deterioration of magnetic properties. Therefore, the Mn content was limited to 0.50 % or less. The Mn content is preferably 0.10 % or less. Mn is also a useful element from the perspective of controlling oxide film formation during primary recrystallization, so the Mn content is 0.01 % or more. An Mn content of less than 0.01 % is not effective in terms of improving hot workability or controlling oxide film formation.

The balance other than the basic components described above includes Fe and incidental impurities. In addition to the aforementioned basic components, inhibitor-forming components and the like can be included. Other typical compositions are illustrated below.

The present disclosure can be applied to any chemical composition that can yield a grain-oriented electrical steel sheet by sequentially performing the known processes of electrical steel sheet production, namely, hot rolling, hot-rolled sheet annealing, cold rolling to the final sheet thickness in one pass, decarburization annealing (which also serves as primary recrystallization annealing), and finishing annealing (which also serves as secondary recrystallization annealing and purification annealing). Therefore, compositions that use inhibitor components to develop secondary recrystallized grains can be adopted. Alternatively, secondary recrystallized grains can be developed without precipitation-type inhibitors (AlN, MnS, MnSe, and the like). The following is a description of the optimal content of each type of inhibitor component.

### [Case of using inhibitor component]

### Sol.Al: 0.01 % or more and 0.05 % or less, N: 0.004 % or more and 0.012 % or less

A Sol.Al content of less than 0.01 % results in a decrease in magnetic flux density, whereas a content of more than 0.05 % results in unstable secondary recrystallization. Therefore, the content is preferably in a range of 0.01 % or more. The content is preferably in a range of 0.05 % or less.

### N: 0.004 % or more and 0.012 % or less

If the N content is less than 0.004 %, AlN does not precipitate properly in the intermediate process, and grain size control becomes difficult. A content exceeding 0.012 % can cause frequent surface defects, called blisters. Therefore, the content is preferably in a range of 0.004 % or more. The content is preferably in a range of 0.012 % or less. The amount of N can be changed as needed by applying a nitriding process during the production process. Hence, in most cases, 0.010 % or less is sufficient to form precipitates.

### Se and/or S (in total): 0.01 % or more and 0.05 % or less

Se and S are insufficient in absolute amounts as inhibitor components if their total content is less than 0.01 %, whereas exceeding 0.05 % makes purification during final annealing difficult. Therefore, their total content is preferably in a range of 0.01 % or more. Their total content is preferably in a range of 0.05 % or less. S and Se can also be used as inhibitors as MnS or MnSe, respectively, or as their composite, Mn(S, Se). Note that AlN-based inhibitors and MnSe and/or MnS-based inhibitors can coexist, and a synergistic effect can thereby be achieved.

### [Case of not including precipitation-type inhibitor component]

In this case, the content of Al, N, Se, and S, which are precipitation inhibitor-forming elements, is limited to very low levels. Specifically, the limitations are Al: less than 100 ppm, S: 50 ppm or less, and Se: 50 ppm or less. If these amounts are exceeded, it becomes difficult to obtain a secondary recrystallized texture due to the action of texture inhibition. The content of N is preferably kept to 50 ppm or less to prevent the formation of Si nitrides after purification annealing. The nitride-forming elements Ti, Nb, B, Ta, and V are also preferably each reduced to a content of 50 ppm or less. This is to prevent the deterioration of iron loss by not interfering with the action of texture inhibition.

The contents and limits regarding inhibitor elements are as described above, but in addition to these elements, grain boundary segregation-type elements can be used enhance properties. Elements such as Cr, Cu, Sn, Sb, Mo, Te, Bi, Pb, Zn, Ge, As, P, In, and Ag can be included in the range of 0.001 % or more and 0.300 % or less. These elements can be used alone or in combination, thereby reducing iron loss. Ni can also be included in the range of 0.005 % or more and 1.50 % or less to improve the magnetic properties by improving the hot-rolled sheet texture.

In particular, the effect of texture on properties is more pronounced in types of steel that do not use inhibitors. Hence, types of steel that do not contain inhibitor components are preferably used in applying the present application.

A slab, which is the starting material with the aforementioned composition, is heated at the appropriate temperature according to the aforementioned chemical composition and is then made into a hot-rolled sheet by hot rolling, which includes rough rolling and finish rolling. Regarding the slab heating temperature, in a case in which precipitation-type inhibitor components are included, heating to a temperature in a temperature region of 1350 °C or higher and 1450 °C or lower is preferable to completely dissolve Al, Se, S, and the like. On the other hand, in a case in which the chemical composition does not contain precipitation-type inhibitor components, an excessively high slab heating temperature causes inhibitor-forming components that are dissolved during heating to be micro-precipitated in a non-uniform manner during hot rolling. As a result, grain boundary migration is locally suppressed, and the particle size distribution becomes extremely inhomogeneous, inhibiting the development of secondary recrystallized grains in the Goss orientation. A relatively low heating temperature, such as 1250 °C or lower, is therefore preferably employed.

There is no need to set any restrictions on the hot rolling conditions, and hot rolling can be performed under the normal set of conditions employed for the production of a grain-oriented electrical steel sheet. The resulting hot-rolled steel strip needs to have a corresponding thickness for achieving a rolling reduction ratio of 89 % or higher during subsequent cold rolling. Specifications such as 0.30 mm thickness and 0.35 mm thickness exist for grain-oriented electrical steel sheets, and the steel strip is rolled to a thickness (such as 0.29 mm) that takes into account the thickness of the forsterite film and insulating coating to be formed on the surface. Therefore, in consideration of the thicker standard for sheet thickness, the sheet thickness after hot rolling needs to be 2.8 mm or more. As the sheet thickness is greater, a higher cooling capacity is required, and the load becomes extremely high at the time of rolling. Hence, the upper limit is preferably 4.0 mm.

The hot-rolled steel strip thus obtained is subjected to hot-rolled sheet annealing. In other words, it is essential to perform hot-rolled sheet annealing with a soaking temperature of 900 °C or higher, and an average cooling rate of 50 °C or higher in a temperature region of 750 °C or lower and 120 °C or higher during the cooling process.

Here, the reason for setting the soaking temperature to 900 °C or higher is that this is necessary to recrystallize and homogenize the worked texture formed by hot rolling. Although there is no need to limit the soaking time, from the perspective of generating a certain degree of recrystallization as described above, the time is preferably 30 seconds or more. The time is preferably 180 seconds or less.

After soaking, the steel strip is then cooled. In this cooling process, the average cooling rate in a temperature region of 750 °C or lower and 120 °C or higher is 50 °C/s or higher. This is because if the average cooling rate is lower than 50 °C/s, the precipitation of coarse carbides, which is thought to affect the reduction of {110}<001> grains, will occur.

It is essential to achieve a high rolling reduction ratio during cold rolling by using an annealing facility with the following specifications for the aforementioned hot-rolled sheet annealing.

That is, the annealing facility includes a heating zone, a soaking zone, and a cooling zone on a conveyance line for a hot-rolled steel strip, in this order from the upstream side of the line. The conveyance line is capable of passing a steel strip with a thickness of 2.8 mm or more, the soaking zone has means for maintaining an ambient temperature at 900 °C or higher, the cooling zone has means for supplying a medium (refrigerant) to the steel strip and maintaining an average cooling rate of 50 °C/s or higher in a temperature region of 750 °C or lower and 120 °C or higher, and the annealing facility includes removal means for removing the medium (refrigerant) on an exit side of the cooling zone.

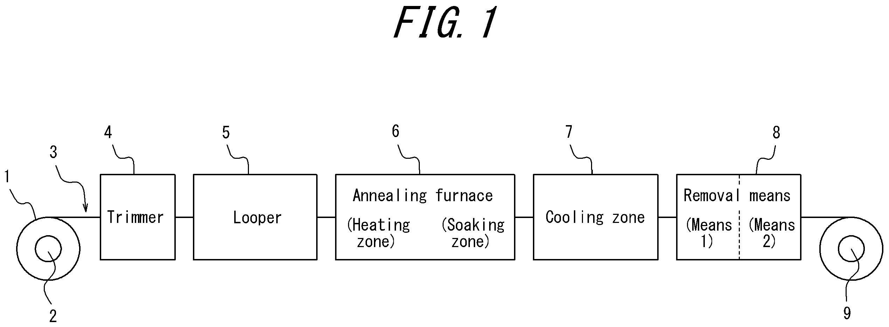

Specifically, as illustrated in FIG. 1, there is a payoff reel 2 on which a hot-rolled steel strip (hereinafter simply referred to as the steel strip) 1 is wound, a conveyance line 3 through which the steel strip 1 uncoiled from this payoff reel 2 passes, a trimmer 4 that trims the edge of the steel strip 1, an entry-side looper 5 that applies tension to the steel strip 1 on the conveyance line 3, an annealing furnace 6 with a heating zone and a soaking zone, a cooling zone 7 for cooling the steel strip 1 exiting the annealing furnace 6, a removal means 8 for removing the refrigerant supplied to the steel strip 1 in the cooling zone 7, and a coiling reel 9. Each of the above configurations is described in detail below.

### [Conveyance line]

As described above, in the present disclosure it is required that a steel strip with a thickness of 2.8 mm or more be accepted into the annealing facility, and for this reason, it is essential that the conveyance line 3 have the capability of passing a steel strip with a thickness of 2.8 mm or more without hindrance. Since rigidity increases as the steel strip is thicker, specific means that can be employed to enable this sheet passing include providing a mechanism that allows higher line tension during sheet passing or increasing the strength of the welded portion when welding the steel strip for continuous sheet passing. Among these, the following sheet passing means A to C are appropriate.

### (Sheet passing means A)

The trimmer is installed between the payoff reel 2 and the entry-side looper 5 to trim the edges of the steel strip 1. In other words, trimming the edges of the steel strip 1 removes stress concentration points such as edge cracks that form during hot rolling, thereby enabling sheet passing of a steel strip with a thickness of 2.8 mm or more.

### (Sheet passing means B)

The steel strip 1 passing through the conveyance line 3 undergoes each process while its direction of travel is changed in the upper, lower, and horizontal directions in the looper 5, the annealing furnace 6, the cooling zone 7, and the like. This change in direction of travel is typically done mainly by changing the winding angle on the roller for conveyance. At this time, the steel strip is sheet passed while being bent many times by the conveyance roller. During this bending process, compressive stress is applied to the inside of the bend and tensile stress to the outside. This tendency becomes more pronounced as the sheet thickness increases, so that thicker steel sheets inevitably have a higher risk of fracture on the line. Since the stress generated during the bending process is affected by the bend radius, the generated stress can be reduced by increasing the diameter of the conveyance roller. To avoid the fracture of the steel strip 1 and perform sheet passing, it is advantageous to set the diameter of the conveyance roller to 950 mm or more. Therefore, by setting the diameter of the conveyance roller to 950 mm or more, the conveyance line 3 can be provided with the ability to pass a steel strip having a thickness of 2.8 mm or more. A conveyance roller diameter of 1100 mm φ is more preferable. A conveyance roller diameter of 1350 mm φ or more is even more preferable.

### (Sheet passing means C)

A device to heat the steel strip 1 to 70 °C or higher is installed on the entry side of the entry-side looper 5. In other words, since a steel strip exhibits greater ductility as the temperature is higher, maintaining a higher temperature can reduce the risk of fracture. In particular, since the steel strip 1 whose temperature has been reduced to room temperature typically enters at the entry-side of the annealing facility, it is advantageous to provide a device for heating in advance or a device for heating after discharge and before the looper 5, so as to provide a function to increase the steel strip temperature. Setting the steel strip temperature to 70 °C or higher significantly reduces the risk of fracture. The heating device is not particularly limited as long as it can efficiently heat the steel strip. For example, a coiled steel strip can be loaded into a gas furnace, or a steel strip discharged from the coil can be heated by a device such as an IH (electromagnetic induction heating) heater. If heating over the entire width of the steel strip is difficult, the aforementioned effect can be obtained by simply heating the edge of the steel strip in the width direction.

### [Heating zone]

The heating zone that constitutes the first half of the annealing furnace is heated to maintain the ambient temperature of the soaking zone, which constitutes the second half of the annealing furnace, at 900 °C or higher.

### [Soaking zone]

The soaking zone has means for maintaining the ambient temperature of the soaking zone at 900 °C or higher. Specifically, it is preferable to provide a heater such as an electric heater or a gas burner. Since a large amount of energy is required to raise the temperature of a thick steel strip, use of a heater such as an IH (electromagnetic induction heating) heater is also effective.

### [Cooling zone]

The cooling zone 7 has a means for supplying refrigerant to the steel strip 1 exiting the soaking zone of the annealing furnace 6 to achieve an average cooling rate of 50 °C/s or higher in a temperature region of 750 °C or lower and 120 °C or higher. Specifically, a means for injecting the refrigerant toward the steel strip is preferably provided. Coolant with a constant temperature of 80 °C or lower is preferably used as the refrigerant. This is because, in general, coolant often circulates in the coolant supply line, but once the coolant is used, the temperature of the coolant rises. To maintain an average cooling rate of 50 °C/s or higher and approximately the same cooling rate within the steel strip coil, the temperature of the coolant also therefore needs to be kept constant.

### [Removal means]

The removal means 8 is included to ensure removal of residual refrigerant on the surface of the steel strip 1 that has exited the aforementioned cooling zone 7. To ensure that the refrigerant is removed, the removal means 8 preferably consists of two or more means with different mechanisms to eliminate the refrigerant (for example, coolant) remaining on the steel strip 1. Specifically, both means for direct elimination and means for indirect elimination are preferable. Here, means for direct elimination include ringer rolls and wiper blades. Means for indirect elimination include the blowing of dry gas not exceeding 150 °C.

Furthermore, it is preferable to include, at the exit side of the removal means 8, means for measuring the temperature of the steel strip and maintaining the temperature at a predetermined temperature. In other words, the steel strip is preferably not held at a temperature exceeding 120 °C until cold rolling after the aforementioned cooling, in order to prevent carbide formation from progressing. Therefore, it is recommended to provide a means for measuring the temperature at the exit side of the removal means 8 and maintaining the temperature in a temperature region of 120 °C or lower according to the measurement results.

Incidentally, if cold rolling in a warm state above 120 °C is required to improve cold rolling manufacturability, the cold rolling is preferably performed within 120 seconds while heating the steel strip that was held at a low temperature after the aforementioned refrigerant removal. This is to take advantage of how there is no immediate transition to carbide formation due to the incubation period that generally exists before nucleation occurs in the case of setting the steel strip to a low temperature near room temperature and then raising the temperature again. In other words, warm rolling can also be used to improve the texture.

In the present disclosure, the aforementioned process of cold rolling after hot-rolled sheet annealing is performed in one pass of cold rolling with a rolling reduction ratio of 89 % or higher, instead of two passes of cold rolling with intermediate annealing having a temperature over 700 °C between the two passes. The cold rolling can be performed under any set of conditions. Incidentally, in a case in which the rolling reduction ratio in the cold rolling is less than 89 %, the aforementioned hot-rolled sheet annealing before cold rolling is not necessary. When hot-rolled sheet annealing is properly performed as described above before cold rolling according to the present disclosure, the reduction of {110}<001> oriented grains, which generally occurs in the case of high reduction rolling, can be suppressed, and further improvement of magnetic properties can be obtained by controlling the texture. However, in a case in which the amount of C contained in the slab stage exceeds 0.05 %, secondary recrystallization defects associated with the {110}<001> orientation grain reduction will occur if the rolling reduction ratio exceeds 95 %.

The present disclosure is not limited to thick materials and can be applied to a thin grain-oriented electrical steel sheet with a final sheet thickness of 0.23 mm or the like. In this case, the hot-rolled steel sheet that serves as the base plate does not need to have a thickness of 2.8 mm or more, but since the cooling stop temperature is set at 120 °C or lower, treatment of residual refrigerant on the steel strip after cooling and temperature control of the steel strip are essential for stable production.

Thereafter, the final cold rolled sheet is subjected to primary recrystallization annealing. The purpose of this primary recrystallization annealing is to subject the cold rolled sheet with a rolled texture to primary recrystallization and to adjust to the optimum primary recrystallized grain diameter for secondary recrystallization, and also to decarburize the carbon contained in the steel by setting the annealing atmosphere to a wet hydrogen-nitrogen or wet hydrogen-argon atmosphere and simultaneously form an oxide film on the surface by the aforementioned oxidizing atmosphere. Therefore, the primary recrystallization annealing is preferably performed at 750 °C or higher with the dew point induced in an H₂ mixed atmosphere. The primary recrystallization annealing is preferably performed at 900 °C or lower with the dew point induced in an H₂ mixed atmosphere. During the temperature increase in the primary recrystallization annealing, the heating rate is preferably set to 200 °C/s or higher in a temperature region of 550 °C or higher and 680 °C or lower, as doing so can further enhance the effect of texture improvement.

An annealing separator is applied to the surface of the steel sheet after the aforementioned primary recrystallization annealing. To form a forsterite film on the surface of the steel sheet after the secondary recrystallization annealing, magnesia (MgO) is used as the main agent of the annealing separator. The forsterite film can be better formed by the addition of appropriate amounts of Ti oxides, Sr compounds, and the like to the separating agent. In particular, the addition of additives that promote uniform forsterite film formation is also advantageous for improving separation properties.

Following the aforementioned process, final annealing is performed for secondary recrystallization and forsterite film formation. As the annealing atmosphere, N₂, Ar, H₂, or any mixed gas thereof is applicable. For more favorable secondary recrystallization, isothermal holding near the secondary recrystallization temperature may be implemented. However, this does not necessarily mean that isothermal holding is necessary, as other approaches, such as a slower heating rate, also have an effect. The maximum annealing temperature is preferably 1100 °C or higher for component purification, since the precipitation of trace components in the final product will lead to degradation of magnetic properties.

After the aforementioned final annealing, it is possible to further apply and bake an insulating coating on the surface of the steel sheet. Such an insulating coating is not limited to a particular type, and any conventionally known insulating coating is applicable. For example, preferred methods are described in JPS5079442A and JPS4839338A where a coating liquid containing phosphate-chromate-colloidal silica is applied on a steel sheet and then baked at a temperature of around 800 °C.

Moreover, flattening annealing may be performed to arrange the shape of the steel sheet. This flattening annealing may also serve as the insulating coating baking treatment.

### EXAMPLES

### (Example 1)

A steel slab controlled to have C: 0.03 %, Si: 3.4 %, Mn: 0.07 %, S, Se, and O less than 50 ppm each, and N less than 60 ppm, with the balance consisting of inevitable impurities, was heated to 1220 °C and then made into a 1.8 mm to 3.5 mm thick hot-rolled sheet by hot rolling. Then, an annealing facility according to the present disclosure was applied, and after soaking at 1030 °C for 30 seconds, in one case (conventional example), the cooling stop temperature was set at 200 °C as in the conventional approach, and the residual coolant remaining on the steel sheet was removed by the heat of the steel sheet, and in the other case (example), the cooling stop temperature was set at 120 °C, and the residual coolant remaining on the steel sheet was removed by coolant removal means (ringer roll). The cooling rate was adjusted to be constant at 80 °C/s during cooling from 800 °C to the cooling stop temperature. Pickling was performed at 80 °C for descaling.

The aforementioned pickled steel strip after hot rolling and annealing was cold rolled (rolling reduction ratio: 83.6 % to 91.6 %) to a final sheet thickness of 0.295 mm. Subsequently, primary recrystallization annealing was performed with a heating rate of 250 °C/s in a temperature region of 550 °C or more and 680 °C or less, a soaking temperature of 800 °C, and a soaking time of 30 s. Test pieces were cut from a position at the coil widthwise center and the longitudinal center of the resulting steel strip coil after primary recrystallization, and the texture was measured by X-ray diffraction. Regarding the texture, the positive pole figure was measured in three planes, and after the ODF was determined by the ADC method, the random strength ratio of the {110}<001> orientation was read from the position (φ, φ1, φ2) = (90, 90, 45). Subsequently, an annealing separator with MgO: 95 % and TiO₂ : 5 % was applied to the steel sheet surface as a water slurry, and the result was subjected to secondary recrystallization annealing. A coating solution containing phosphate-chromate-colloidal silica at a 3:1:3 weight ratio was applied to the surface of the final annealed sheet obtained in this way and was baked thereon at 800 °C.

The magnetic properties were investigated at the widthwise center of the product sheet coil thus obtained. Regarding the magnetic properties, after stress relief annealing at 800 °C for 3 hours, a 30 mm × 280 mm test piece was cut, from the position corresponding to the outer winding of the coil during secondary recrystallization annealing, so that the total weight was 500 g or more. B₈ was measured by the Epstein test specified in JIS C2550.

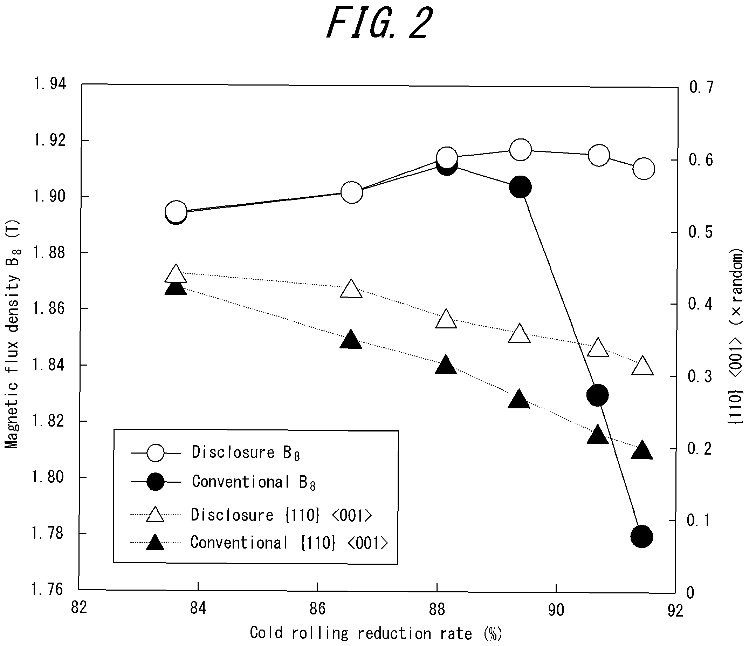

The results of the above measurements of the random strength ratio and magnetic flux density of the texture, organized in relation to rolling reduction ratio during cold rolling, are illustrated in FIG. 2.

As illustrated in FIG. 2, it was confirmed that the production method according to the present disclosure suppresses the reduction of the {110}<001> orientation even at a high reduction rolling ratio of 89 % or higher, and that the magnetic properties of the grain-oriented electrical steel sheet are improved. Conversely, in the conventional case of a stop temperature of 200 °C during cooling after soaking, the magnetic flux density drops significantly at a high reduction rolling rate of 89 % or higher.

### (Example 2)

A steel slab containing C: 0.04 %, Si: 3.3 %, Mn: 0.05 %, and other components listed in Table 1 was heated to 1200 °C and then made into a hot-rolled steel strip by hot rolling. Furthermore, after soaking at 1000 °C for 60 seconds in an annealing facility according to the present disclosure and cooling under the cooling conditions listed in Table 1, and after hot-rolled sheet annealing via thermal hysteresis after cooling, warm rolling was performed using a tandem mill. The initial sheet thickness of the hot-rolled steel strip and the final sheet thickness and rolling reduction ratio are as listed in Table 1. Subsequently, primary recrystallization annealing was performed, with a heating rate of 200 °C/s in a temperature region of 400 °C or more and 700 °C or less, at 850 °C for 40 s. Next, the steel sheet was coated with an annealing separator having MgO as a main agent and was subjected to secondary recrystallization annealing.

A coating solution containing phosphate-chromate-colloidal silica at a 3:1:2 weight ratio was applied to the secondary recrystallized annealed plate obtained in this way, and after flattening annealing at 850 °C for 30 seconds, a test piece measuring 30 mm × 280 mm was cut from the position corresponding to the outer winding of the coil during secondary recrystallization annealing, so that the total weight was 500 g or more. B₈ was measured on this test piece by the Epstein test specified in JIS C2550. The relationship between the magnetic flux density obtained in this case and each experimental condition is illustrated in Table 1.

It is clear from Table 1 that under the set of conditions according to the present disclosure, better magnetic properties are obtained for the case of a rolling reduction ratio of 89 % or higher as compared to the case of less than 89 %. In particular, when applying a high rolling reduction ratio, good magnetic properties are obtained by satisfying the set of conditions of the present disclosure. For comparison, it was also confirmed that in the case of production by setting the soaking temperature to 890 °C and other conditions to be the same as No. 3 in Table 1, the desired texture could not be obtained in the secondary recrystallization annealed sheet, resulting in a magnetic flux density B₈ of less than 1.85 T.

### [Table 1]

**[Table 1]**

| Steel sheet No. | Added components (mass%) | | | | | | | Annealing and cooling conditions | | | Thermal hysteresis after cooling | Cold rolling conditions | | | B₈ (T) |
|---|---|---|---|---|---|---|---|---|---|---|---|---|---|---|---|
| | Si | C | Mn | Al | N | S | other elements | start temperature | stop temperature | cooling rate | | initial thickness | final sheet thickness | rolling reduction ratio (%) | |
| 1 | 3.4 | 0.04 | 0.05 | 0.006 | 0.004 | 0.002 | - | 800 °C | 250 °C | 60 ° C/s | no heating | 2.8 mm | 0.29 mm | 89.6 | 1.895 |
| 2 | 3.4 | 0.04 | 0.05 | 0.006 | 0.004 | 0.002 | - | 800 °C | 250 °C | 60 ° C/s | no heating | 2.4 mm | 0.29 mm | 87.9 | 1.908 |
| 3 | 3.4 | 0.04 | 0.05 | 0.006 | 0.004 | 0.002 | - | 800 °C | 90 °C | 60 ° C/s | no heating | 2.8 mm | 0.29 mm | 89.6 | 1.917 |
| 4 | 3.4 | 0.04 | 0.05 | 0.006 | 0.004 | 0.002 | - | 800 °C | 90 ° C | 60 ° C/s | no heating | 2.4 mm | 0.29 mm | 87.9 | 1.910 |
| 5 | 3.4 | 0.04 | 0.05 | 0.006 | 0.004 | 0.002 | - | 800 °C | 90 ° C | 60 ° C/s | rolling entry side 120 °C × 120 s | 2.8 mm | 0.29 mm | 89.6 | 1.918 |
| 6 | 3.4 | 0.04 | 0.05 | 0.005 | 0.003 | 0.001 | Ni: 0.02, Sn: 0.01, Cu: 0.05, P: 0.08, Cr: 0.05 | 800 °C | 100 °C | 80 °C/s | no heating | 4.0 mm | 0.34 mm | 91.5 | 1.922 |
| 7 | 3.4 | 0.04 | 0.05 | 0.005 | 0.003 | 0.001 | Ni: 0.02, Sn: 0.01, Cu: 0.05, P: 0.08, Cr: 0.05 | 800 °C | 100 °C | 40 ° C/s | no heating | 4.0 mm | 0.34 mm | 91.5 | 1.893 |
| 8 | 3.4 | 0.04 | 0.05 | 0.004 | 0.002 | 0.001 | Sb: 0.02, P: 0.03, Cr: 0.05, Nb: 0.001, Ti: 0.001 | 750 °C | 120 °C | 50 °C/s | no heating | 2.8 mm | 0.29 mm | 89.6 | 1.923 |
| 9 | 3.4 | 0.04 | 0.05 | 0.004 | 0.002 | 0.001 | Sb: 0.02, P: 0.03, Cr: 0.05, Nb: 0.001, Ti: 0.001 | 750 °C | 120 °C | 50 ° C/s | no heating | 2.4 mm | 0.29 mm | 87.9 | 1.914 |
| 10 | 3.4 | 0.04 | 0.05 | 0.008 | 0.005 | 0.001 | Sb: 0.02, Mo: 0.01, Bi: 0.001, As: 0.001 | 800 °C | 100 °C | 70 ° C/s | no heating | 2.9 mm | 0.29 mm | 90.0 | 1.922 |
| 11 | 3.4 | 0.04 | 0.05 | 0.008 | 0.005 | 0.001 | Sb: 0.02, Mo: 0.01, Bi: 0.001, As: 0.001 | 680 °C | 100 °C | 70 ° C/s | no heating | 2.9 mm | 0.29 mm | 90.0 | 1.901 |
| 12 | 3.4 | 0.04 | 0.05 | 0.005 | 0.003 | 0.001 | Te: 0.001, In: 0.001, Pb: 0.001 | 800 °C | 120 °C | 70 ° C/s | no heating | 3.2 mm | 0.29 mm | 90.9 | 1.924 |
| 13 | 3.4 | 0.04 | 0.05 | 0.005 | 0.003 | 0.001 | Te: 0.001, In: 0.001, Pb: 0.001 | 800 °C | 150 °C | 70 ° C/s | no heating | 3.2 mm | 0.29 mm | 90.9 | 1.904 |
| 14 | 3.4 | 0.04 | 0.05 | 0.005 | 0.003 | 0.001 | Te: 0.001, In: 0.001, Pb: 0.001 | 800 °C | 200 °C | 70 ° C/s | no heating | 3.2 mm | 0.29 mm | 90.9 | 1.900 |
| 15 | 3.4 | 0.04 | 0.05 | 0.008 | 0.005 | 0.001 | Zn: 0.001, Ag: 0.005 | 850 °C | 80 °C | 100 °C/s | rolling entry side 120 °C × 120 s | 2.8 mm | 0.29 mm | 89.6 | 1.921 |
| 16 | 3.4 | 0.04 | 0.05 | 0.008 | 0.005 | 0.001 | Zn: 0.001, Ag: 0.005 | 850 °C | 80 °C | 100 °C/s | aging treatment 150 °C × 5 min | 2.8 mm | 0.29 mm | 89.6 | 1.899 |
| 17 | 3.4 | 0.04 | 0.05 | 0.003 | 0.002 | 0.001 | Ni: 0.02, Sn: 0.01, Mo: 0.01, Ge: 0.001 | 800 °C | 60 °C | 60 °C/s | no heating | 2.8 mm | 0.29 mm | 89.6 | 1.922 |
| 18 | 3.4 | 0.04 | 0.05 | 0.003 | 0.002 | 0.001 | Ni: 0.02, Sn: 0.01, Mo: 0.01, Ge: 0.001 | 800 °C | 60 °C | 60 ° C/s | no heating | 2.4 mm | 0.29 mm | 87.9 | 1.915 |

### (Example 3)

A steel slab containing C: 0.05 %, Si: 3.4 %, Mn: 0.08 %, Al: 0.015 %, N: 0.006 %, S: 0.003 %, and Se: 0.012 % was heated to 1400 °C and then made into a hot-rolled steel strip with a sheet thickness of 2.6 mm by hot rolling. Then, the annealing facility of the present disclosure was applied, and after soaking at 1080 °C for 60 seconds, cooling was performed with a cooling stop temperature set at 80 °C. The residual coolant remaining on the steel sheet was removed by a coolant removal means (ringer roll). The cooling rate was adjusted to be constant at 60 °C/s during cooling from 850 °C to the cooling stop temperature. After the above hot-rolled sheet annealing, pickling for descaling was performed at 80 °C. Cold rolling was performed on the steel strip after pickling. At this time, the final sheet thickness was changed in various ways, and the rolling reduction ratio was changed. The resulting cold-rolled sheet was subjected to decarburization annealing at 840 °C for 2 minutes in wet hydrogen, then coated with MgO containing 5 % TiO₂ by mass as an annealing separator, followed by final annealing at 1200 °C for 10 hours.

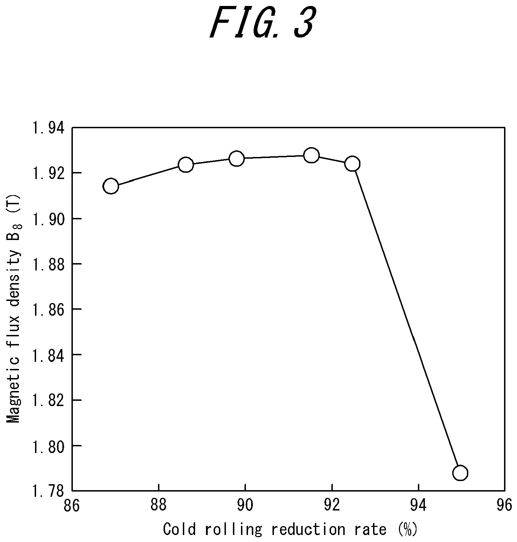

A plurality of 30 mm × 280 mm test pieces were cut from different positions in the width direction from the outermost winding of the obtained coil, and the magnetic flux density was evaluated using a single-plate magnetic property measurement device. The relationship between the average value of the obtained magnetic flux density and the rolling reduction ratio is illustrated in FIG. 3. It is clear from FIG. 3 that good magnetic properties are maintained even at the high reduction rolling ratio under the set of conditions of the present disclosure.

### INDUSTRIAL APPLICABILITY

The annealing facility of the present disclosure can be advantageously applied to production processes that require texture control using solute C, and high reduction rolling during production.

### REFERENCE SIGNS LIST

- 1: Hot-rolled steel strip
- 2: Payoff reel
- 3: Conveyance line
- 4: Trimmer
- 5: Entry-side looper
- 6: Annealing furnace
- 7: Cooling zone
- 8: Removal means
- 9: Coiling reel

## Claims

1. An annealing facility comprising a heating zone, a soaking zone, and a cooling zone on a conveyance line for a steel strip, wherein the conveyance line is capable of passing a steel strip with a thickness of 2.8 mm or more, the soaking zone has means for maintaining an ambient temperature at 900 °C or higher, the cooling zone has means for supplying a refrigerant to the steel strip and maintaining an average cooling rate of 50 °C/s or higher in a temperature region of 750 °C or lower and 120 °C or higher, and the annealing facility comprises removal means to remove the refrigerant on an exit side of the cooling zone.

2. The annealing facility according to claim 1, further comprising a payoff reel that uncoils the steel strip onto the conveyance line at a starting end of the conveyance line and an entry-side looper that applies tension to the steel strip on the conveyance line, and between the payoff reel and the entry-side looper, a trimmer that trims an edge of the steel strip.

3. The annealing facility according to claim 1 or 2, comprising a transport roller that changes a direction of travel of the steel strip passing through the conveyance line, wherein the transport roller has a diameter of 950 mm or more.

4. The annealing facility according to claim 2, comprising means for heating the steel strip to 70 °C or higher on an entry side of the entry-side looper.

5. The annealing facility according to claim 1 or 2, wherein the refrigerant is a coolant at 80 °C or lower, and the removal means comprises two or more means with different mechanisms for eliminating residual coolant on the steel strip.

6. An annealing facility according to claim 5, wherein the removal means include both means for directly eliminating and means for indirectly eliminating the residual coolant on the steel strip.

7. The annealing facility according to claim 1 or 2, comprising, at an exit side of the removal means, means for measuring a temperature of the steel strip and maintaining the temperature at a predetermined temperature.

8. A method of producing a grain-oriented electrical steel sheet, the method comprising performing hot rolling on a steel material containing C: 0.01 mass% or more and 0.10 mass% or less, Si: 2.0 mass% or more and 4.5 mass% or less, and Mn: 0.01 mass% or more and 0.50 mass% or less; performing hot-rolled sheet annealing, with a soaking temperature of 900 °C or higher and an average cooling rate of 50 °C/s or higher in a temperature region of 750 °C or lower and 120 °C or higher during a cooling process, using the annealing facility according to claim 1, on a steel strip after the hot rolling; subsequently obtaining a final sheet thickness by one pass of cold rolling with a rolling reduction ratio of 89 % or higher; and subsequently performing decarburization annealing, next applying an annealing separator to a steel strip surface, and then performing final annealing.

9. The method of producing a grain-oriented electrical steel sheet according to claim 8, wherein the steel strip after the hot rolling has a thickness of 2.8 mm or more.

10. The method of producing a grain-oriented electrical steel sheet according to claim 8 or 9, wherein a time during which a steel strip temperature exceeds 120 °C after the hot-rolled sheet annealing and before the cold rolling is performed is 0 seconds or more and is and 120 seconds or less.

11. The method of producing a grain-oriented electrical steel sheet according to claim 8 or 9, wherein a heating rate in a temperature region of 550 °C or higher to 680 °C or lower in a primary recrystallization heating process of the decarburization annealing is 200 °C/s or higher.
